# EUROPEAN PATENT APPLICATION

(11) **EP 1 031 657 A1**
(43) Date of publication of application: **30.08.2000**
(21) Application number: 00103856.1
(22) Date of filing: 24.02.2000
(51) Int. Cl.: D21C 9/10, D21C 5/02

(54) **A method for bleaching secondary fibres**

(30) Priority: 25.02.1999 US 257271
(71) Applicant: Degussa-Hüls Aktiengesellschaft, 60287 Frankfurt am Main (DE)
(72) Inventor: Taylor, Robert C., Wyckoff, New Jersey 07481 (US); Cronis, John D., Mahwah, New Jersey 07430 (US)

(57) **Abstract**

Secondary fiber sources are converted into brightened pulp by washing pulped secondary fibers with at least sodium hydroxide and sodium silicate, then bleaching the washed fibers with at least one sulfur-containing reductive bleaching agent, preferably formamidine sulfinic acid. There is no hydrogen peroxide, and preferably no oxidizing bleaching agent, added into or present in the process at least until the secondary fiber sources are washed. The presence of the sodium silicate in the washing stage, and optionally in the repulping stage, enhances bleaching with the sulfur-containing reductive bleaching agent to produce a high quality, bleached pulp, despite the absence of oxidizing bleaching agents from the process. Moreover, the absence of oxidizing bleaching agents makes the process less harmful to the environment.

## Description

### BACKGROUND OF THE INVENTION

### 1. Field of the Invention

This invention relates to the recycling of waste paper and other secondary fiber sources to form a bleached pulp that is suitable for making high quality, bleached paper and other products.

### 2. Description of the Related Art

Heightened environmental awareness towards conservation of our natural resources, coupled with high demand for and consumption of paper products into waste paper and other secondary fiber sources, have over the past years collectively driven the development and implementation of advances in the field of paper recycling. Among the objects sought from recycling processes are improvements in yield and output quality, and development of more environmentally friendly processes.

Traditionally, the majority of wastepaper is recycled without a deinking procedure. For packaging paper, cardboard, corrugated board, towels or the simplest tissue products, removal of the printing ink is not necessary. The printing inks remain in the paper and cause a greyish-brown coloration of the paper, which precludes its use for higher grade products.

Other conventional processes for recycling secondary fiber sources involve multi-stage processes designed to bleach and, where necessary, deink the secondary fiber sources to produce a brightened, high quality product. Conventional processes generally include at least the following stages: First, the secondary fiber source is pulped in an aqueous medium to break down or disintegrate the secondary fiber source from agglomerations of fibers into individual or much smaller clusters of fibers. Sodium hydroxide is most commonly selected for imparting alkalinity to the repulping stage to promote the disintegration of fiber agglomerates into smaller clusters. The repulping stage is optionally followed by a screening stage to remove contaminants, such as binders, caps, labels, and the like. Next, the pulp is subjected to deinking, where necessary. Deinking involves the practice of one or more washing and/or flotation stages designed to separate printing ink from the fibers. The residual alkalinity of the pulp slurry from the repulping stage assists in swelling the fiber structures to promote ink removal. Although the alkaline repulping conditions are essential for deinking, the alkaline conditions also cause discoloration, more particularly yellowing, of the fibers.

To counteract the discoloration caused by the sodium hydroxide, the pulping stage is preceded, accompanied and/or followed by treating of the pulp with a bleaching agent, most commonly hydrogen peroxide. Hydrogen peroxide is widely used because it is easy to handle and is applicable over a wide range of process conditions. Under ideal alkaline conditions, the hydrogen peroxide reacts with alkaline chemicals and is dissociated to form perhydroxylate anions (HOO⁻), which in adequate concentrations cause bleaching. Higher pH levels favor the formation of the perhydroxylate anion, but undesirably also simultaneously cause the hydrogen peroxide to decompose into water and oxygen. The unavoidable presence of metal ions tends to decompose the perhydroxylate anion into water and oxygen and thereby adversely affect bleaching performance of the hydrogen peroxide.

For this reason, it is known in the art to use hydrogen peroxide with sodium silicate, which, when used in conjunction with organic chelating agents (such as penta sodium diethylene triamine penta acetate in concentrations of, for example, 0.1% to 0.3%), is one of the best and most economical pH buffers and stabilizers for the hydrogen peroxide. In the deinking or bleaching liquor, the sodium silicate forms a colloidal silica gel, which absorbs the heavy metal ions as well as fines that would otherwise decompose the hydrogen peroxide. The silica gel thus stabilizes the perhydroxylate anion formed under the alkaline conditions, leaving the anion available in adequate concentrations for the bleaching reaction.

The use of hydrogen peroxide as a bleaching agent, however, imposes a high chemical oxygen demand (COD) or biological oxygen demand (BOD) to the effluent waste streams, making purification of these streams to ecologically acceptable levels difficult. Hydrogen peroxide bleaching also warrants the practice of higher pH levels to promote perhydroxylate anion formation. With the promulgation of stricter environmental regulations, many mills are seeking to reduce their overall chemical usage and pH levels of effluent streams.

It would, therefore, be a significant advancement in the art to provide a process that permits the recycling, deinking, and enhanced bleaching with sulfur-containing reductive agents of secondary fiber sources to produce high quality, bleached pulp, yet does not rely on chemicals that impose a high COD or BOD to the effluent waste streams and does not mandate high pH levels.

### SUMMARY OF THE INVENTION

The accomplishment of the above-outlined advancement in the art is achieved by conducting the recycling process without the addition of hydrogen peroxide, and preferably without the addition of any oxidizing brightening substance, at least until the washing stage is complete. Conventionally, it is well understood in the art that without the use of an acceptable oxidizing bleaching agent, such as hydrogen peroxide with a stabilizer, the sodium hydroxide from a chemical or chemical/mechanical repulping stage will cause an irreversible yellowing of the repulped material, even at low sodium hydroxide concentrations of 0.5% to 2.0%.

Surprisingly, the inventors found that the yellowing effect produced by the sodium hydroxide can be significantly reduced, if not altogether avoided, and a significant brightness increase can be realized in the bleached product by washing the repulped material in a sodium silicate solution without hydrogen peroxide being present, and then subjecting the washed pulp to a bleaching step with a sulfur-containing reductive bleaching agent such as, for example, formamidine sulfinic acid (FAS). The sodium silicate solution is preferably added prior to or during the repulping stage, but in a less preferred embodiment may be added after repulping yet before or in the early stages of washing. The charging of an effective amount of sodium silicate solution in the absence of hydrogen peroxide, and preferably in the absence of any oxidizing brightening substance, in combination with a washing step followed by one or more bleaching stages with at least one sulfur-containing reductive agent significantly reduces, if not altogether prevents, the sodium hydroxide from yellowing the pulp and increases the overall brightness of the treated pulp.

These and other objects, features, and advantages of the present invention will become apparent from the following detailed description when taken in conjunction with the accompanying Figure, which illustrates, by way of example, the principles of this invention.

### BRIEF DESCRIPTION OF THE FIGURE

The accompanying Figure serves to elucidate the principles of this invention by depicting a schematic flow diagram for carrying out the inventive process in accordance with one embodiment of this invention.

### DETAILED DESCRIPTION OF THE INVENTION

This process can be applied to various kinds of secondary fiber sources. As referred to herein, secondary fibers are any type of paper or paperboard fiber from waste papers and other used or rejected reclaimable fiber sources and include, but are not limited to, mixed paper, photocopy papers, sorted (post-consumer) white ledger, magazines, hard white envelope cuttings, sorted and mixed office papers, coated book stock, hard white shavings, white blank news, corrugated containers, and heavily printed bleached white sulfate cuts.

The secondary fiber sources used in the inventive process preferably contain less than 50% mechanical fibers, since formamidine sulfinic acid (FAS) bleaching is generally not as effective on mechanical fibers as it is on chemical fibers. As referred to herein, mechanical fibers mean fibrous components of pulp produced by use of mechanical pulping process, such as, without limitation, grind stones, refiners, and the like. Fibers obtained from chemical and chemical/mechanical treatments are not to be considered mechanical fibers, but rather as chemical fibers. Preferably, the secondary fiber sources collectively are comprised of 85% mixed office paper and 15% colored photocopy paper.

The process will now be further explained with reference to the Figure.

As shown in the Figure, the secondary fiber source is introduced into a pulper 10. Pulping of the secondary fiber sources (also known as "repulping") in the pulper 10 is preferably conducted with a combination of chemicals and mechanical energy. The secondary fiber sources are diluted with an aqueous medium, preferably containing sodium silicate/sodium hydroxide solution to a consistency adequate for processing. Representative consistencies are between about 5% and about 25%, preferably 10% to 20%. The repulping step takes place at a temperature level in a range of from about 25°C to 70°C, preferably in a range of from about 30°C and 60°C, and produces an aqueous printing ink-dirt-fiber-filler suspension. Disintegration time can be from 5 to 60 minutes, but preferably is from 10 to 40 minutes. The addition of chemicals, in particular sodium hydroxide, improves the disintegration of the paper structure, reinforces the dispersion of printing inks and simultaneously bleaches the paper fibers. The pH during this stage should be from 7-12, but more preferably is from 7.5 to 10.5. The more preferred pH level of 7.5-10.5 is lower than that of conventional processes, and is primarily attributable to the presence of sodium silicate. With a subsequent cleaning step, the light and heavy dirt particles are separated and removed. The dispersion of the printing ink particles from the fiber is improved by an intensive mechanical treatment.

The sodium silicate medium added into the pulper 10 in the illustrated embodiment preferably is about 0.1% to about 4.0%, more preferably about 0.2% to about 2%, (by weight based on bone dry pulp) 40-45° Baume sodium silicate solution. A charge of less than about 0.1% by weight of 40-45° Baume sodium silicate solution will be ineffective in imparting an adequate FAS brightness increase. On the other hand, a charge of more than about 4.0% by weight of 40-45° Baume sodium silicate solution produces a pulp that would adversely affect the retention aids used on paper-forming machines in subsequent processing stages. Although this invention is not to be limited to any particular commercially available sodium silicate solution, commercial solutions of sodium silicate are usually in a range of from 40 to 45 Baume, corresponding to a SiO₂/Na₂O ratio of 1.8 to 3.2%. A commercial supplier of sodium silicate solutions is PQ Corporation of Valley Forge, PA.

In accordance with the inventive process, deinking can be performed by washing, or a combination of flotation and washing.

The illustrated embodiment includes a flotation apparatus 12 into which pulped slurry from the pulper 10, as well as a recycle stream 32, are introduced. Flotation utilizes the differences in hydrophilic properties of printing ink and fibers. The pulp suspension, which at this stage may have a consistency of, for example, 0.5% to 3% by weight, is aerated. In the presence of anionic surfactants, such as soap, a calcium ion source, such as CaO/l, and a nonionic surfactant, such as fatty alcohol polyglycol-ethers or-esters, a froth is formed in which the printing ink is collected and removed by the aeration. The efficiency of the flotation depends on several factors, including the dispersion of printing ink, the intensity of aeration, the consistency in the flotation cells, and the flotation time. Generally, the temperature during flotation should not be lower than 40°C, and the amount of fatty acids or their soaps ranges from 0.1% to 1.0% by weight. The flotation process also removes larger printing ink particles up to 160 microns. Sticky impurities, sometimes known in the industry as "stickies, can also be removed from the pulp by flotation.

In the illustrated embodiment, the pulp slurry is passed from the flotation apparatus 12 into a washer/thickener 14 for additional deinking. Depending upon the consistency of the pulp slurry existing the flotation apparatus 12, the pulp slurry may be diluted with an appropriate wash water batchwise or continuously to a consistency of, for example, from 0.1 % to 5% by weight, but preferably from 0.3% to 3% by weight. An efficient washing separates fines and fillers. Simultaneous or subsequent to washing, the pulp slurry can optionally be thickened to a consistency in a range of from 3% to 35% by weight, but preferably is thickened to a consistency of from 5% to 35% by weight. As referred to herein, thickening involves the removal of liquid, and in particular water, from a pulp slurry to increase its consistency (i.e., fiber concentration). Washing and/or thickening can be performed by, for example, passing the washed pulp over screens, pressing the washed pulp between screens, or squeezing the washed pulp between a screen covered rotating cylinder. Water soluble components of the pulp slurry and components smaller than the screen size are removed from the process during pulp washing and/or thickening. Dimensions of the screens are preferably in a range of from 10 microns to 250 microns, and more preferably are from 25 microns to 100 microns.

The deinked pulp is then subjected to a post-bleaching operation, which may optionally be accompanied by a dispersion step. A disperser is represented in the Figure by reference numeral 16, and in this embodiment includes a FAS/NaOH feed stream 18 and steam feed 20. Dispersion may be conducted, by way of example, with an aqueous medium comprising from about 0.1% to about 2.0% by weight formamidine sulfinic acid and from about 0.01 to about 1.5 wt% sodium hydroxide, and sufficient steam to operate the disperser 16 at a predetermined temperature, such as, for example, 30°C to 120°C, preferably 60°C to 120°C. In the illustrated embodiment, post-bleaching chemicals (e.g., FAS/NaOH) are added both before and after the dispersion step. It is understood, however, that the post-bleaching chemicals can be added either before or after the dispersion step is conducted. During dispersion, residuals of printing ink and dirt particles are decreased in size by intensive mechanical treatment at high temperatures. Suitable dispersers 16 for mechanical treatment of the deinked pulp include, without limitation, refiners, dispersers, kneaders, and/or similar apparatuses. Although dispersing with post-bleaching does not produce a higher final brightness than simple post-bleaching under the same conditions, dispersion does produce an apparent substantially purer or cleaner pulp.

From the disperser 16, the treated pulp is passed to a bleaching apparatus 22, where it is treated with one or more sulfur-containing reductive bleaching agents. As the bleaching apparatus 22, a chest or bleaching tower are preferred. Representative sulfur-containing reductive bleaching agents include solutions comprising formamidine sulfinic acid (H₂N-C(NH)-SO₂H) with sodium hydroxide and/or sodium carbonate. Formamidine sulfinic acid can be applied in a concentration of from about 0.1% to 2.0% by weight, with 0.01 to 1.5 wt% sodium hydroxide. The resultant pulp solution is allowed to react at a temperature in a range of, for example, 30°C to 120°C, but preferably in a range of from 60°C to 120°C, for an effective amount of time, for example, 2 to 180 minutes. The use of a bleaching tower or chest inhibits the inclusion of atmospheric oxygen, which can react with FAS and decrease its efficiency.

Bleaching with formamidine sulfinic acid (FAS), in, for example, a disperser or tower, yields the best results under alkaline conditions. However, it is believed that other sulfur-containing reducing agents, such as sodium hydrosulfite and sulfur dioxide, may be used independently or in combination with FAS. Although the formamidine sulfinic acid is highly soluble in sodium hydroxide, it is also very unstable. Consequently, the solution should not be stored for a prolonged period of time. Rather, alkali should be added to the formamidine sulfinic acid just prior to injection into the bleaching process, although the alkali and FAS may be added separately but simultaneously. The optimum ratio of formamidine sulfinic acid (100%) to sodium hydroxide (100%) is approximately 2:1.

In the illustrated embodiment, the bleached pulp is removed from the bleaching apparatus 22, combined with a recycle filtrate stream 24, and subjected to a post-deinking operation at 26 for additional flotation and/or washing. From the post-deinking device 26, the consistency of the pulp is increased in a thickening apparatus 28 to an extent appropriate for further processing. A product stream is removed via exit 30, while a filtrate portion from the thickening step is recycled via line 32 to the flotation apparatus 12.

Modifications and variations to the illustrated embodiment fall within the ambit of this invention and the accompanying claims. For example, the process may be practiced without a flotation apparatus, thickener, disperser, and/or post-deinking apparatus. Further, in addition to or as an alternative to adding the sodium silicate to the pulper 10, the sodium silicate may be added to the flotation device 12 and/or to the washing/thickening apparatus 14. Recycled streams may be removed and added to the illustrated embodiment as required or desired for a particular application.

This invention will now be further described by way of the following examples, which serve to further elucidate the principles of this invention without restricting its scope.

### EXAMPLES

### Examples 1-3

A secondary fiber source consisting of 85% unprinted mixed office papers and 15% unprinted color photocopy papers was introduced into a pulper, and diluted to 15% consistency with 0.25% of 45° Baume sodium silicate solution. The pulper was operated at a temperature of 40°C for 20 minutes. The pulp was then diluted with water to a consistency between 1-2% and subjected to a washing treatment, followed by thickening to a consistency of about 5%. In Examples 1-3, to the washed and thickened fibers was added a solution of FAS in amounts of 0.15, 0.25, and 0.5% FAS (based on dry weight of fiber), respectively. The FAS solution contained NaOH in an amount of 50% of the amount of FAS. The FAS was allowed to react with the pulp fibers at 70°C for 1 hour. The results are set forth in Table 1 below.

### Comparative Examples A, B, and C

The process described above in connection with Examples 1-3 was followed, except that in each of the comparative examples an equivalent amount of NaOH (i.e., to attain the same amount of alkalinity present in the sodium silicate solution) was substituted for the sodium silicate solution. The brightness was measured in % ISO; the results are set forth in Table 1 below.

**TABLE 1**

| Example | Washed Brightness (WB) | % FAS | Bleached Brightness (BB) | Brightness Gained by FAS (BB-WB) |
|---|---|---|---|---|
| 1 | 75.4 | 0.15 | 85.4 | 10.0 |
| 2 | 75.4 | 0.25 | 86.4 | 11.0 |
| 3 | 75.4 | 0.5 | 86.8 | 11.4 |
| A | 70.7 | 0.15 | 78.5 | 7.8 |
| B | 70.7 | 0.25 | 80.9 | 10.2 |
| C | 70.7 | 0.5 | 81.4 | 10.7 |

From the results set forth in Table 1, it was found that the presence of sodium silicate in Examples 1-3 attributed to a greater brightness gain being attained from the FAS bleaching of the washed pulp. More specifically, the washed pulps of Examples 1-3 underwent brightness gains of 10.0, 11.0, and 11.4 % ISO, respectively, which are greater than the corresponding brightness gains of Comparative Examples A-C by 2.2, 0.8, and 0.7 % ISO, respectively. Additionally, the overall brightness attained by Examples 1-3 from both washing and bleaching were 85.4, 86.4, and 86.8 % ISO, respectively, which are greater than those of Comparative Examples A-C by 6.9, 5.5, and 5.4 % ISO, respectively.

### Examples 4-9

A secondary fiber source consisting of 85% printed mixed office papers and 15% unprinted color photocopy papers was introduced into a pulper, and diluted to 15% consistency with 0.25% of 45° Baume sodium silicate solution. The pulper was operated at a temperature of 40°C for 20 minutes. The pulp was then diluted with water to a consistency between 1-2% and subjected to a washing treatment, followed by thickening to a consistency of about 5%. In Examples 4-6, to the washed and thickened fibers was added a solution of FAS in amounts of 0.15, 0.25, and 0.5% FAS (based on dry weight of fiber), respectively. The FAS solution contained NaOH in an amount of 50% of the amount of FAS. The FAS was allowed to react with the pulp fibers at 70°C for 1 hour. Similarly, in Examples 7-9, to the pulped fibers was added a solution of FAS (50% by weight NaOH) in concentrations of 0.15, 0.25, and 0.5, respectively, which was allowed to react with the pulp fibers at 70°C for 1 hour. The % ISO measured are set forth in Table 2 below.

### Comparative Examples D, E, and F

The process described above in connection with Examples 4-6 was followed, except that in each example an equivalent amount of NaOH was substituted for the sodium silicate solution. The brightness in measured % ISO are set forth in Table 2 below.

**TABLE 2**

| Example | Washed Brightness (WB) | % FAS | Bleached Brightness (BB) | Brightness Gained by FAS (BB-WB) |
|---|---|---|---|---|
| 4 | 78.2 | 0.15 | 87.1 | 8.9 |
| 5 | 78.2 | 0.25 | 88.2 | 10.0 |
| 6 | 78.2 | 0.5 | 88.4 | 10.2 |
| 7 | 78.5 | 0.15 | 86.7 | 8.2 |
| 8 | 78.5 | 0.25 | 87.3 | 8.8 |
| 9 | 78.5 | 0.5 | 87.5 | 9.0 |
| D | 78.2 | 0.15 | 85.2 | 7.0 |
| E | 78.2 | 0.25 | 85.5 | 7.3 |
| F | 78.2 | 0.5 | 85.7 | 7.5 |

Table 2 demonstrates that greater brightness gains were attained from the FAS bleaching of washed pulp with sodium silicate than without sodium silicate. More specifically, the sodium-silicate-solution-treated washed pulps of Examples 4 and 7 underwent brightness gains of 8.9 and 8.2 % ISO, respectively, which are greater than the corresponding brightness gain of Comparative Example D by 1.9 and 1.2 % ISO, respectively. The sodium-silicate-solution-treated washed pulps of Examples 5 and 8 underwent brightness gains of 10.0 and 8.8 % ISO, respectively, which are greater than the corresponding brightness gain of Comparative Example E by 2.7 and 1.5 % ISO, respectively. The sodium-silicate-solution-treated washed pulps of Examples 6 and 9 underwent brightness gains of 10.2 and 9.0 % ISO, respectively, which are greater than the corresponding brightness gain of Comparative Example F by 2.7 and 1.5 % ISO, respectively. Additionally, the overall brightness attained by Examples 4-9 from both washing and bleaching were greater than those of Comparative Examples D-F.

### Examples 10-12

A secondary fiber source consisting of 73% printed mixed office papers, 12% unprinted old news print (ONP), and 15% unprinted color photocopy papers was introduced into a pulper, and diluted to 15% consistency with 0.25% of 45° Baume sodium silicate to a consistency of 15%. The pulper was operated at a temperature of 40°C for 20 minutes. The pulp was then diluted with water to a consistency between 1-2% and subjected to a washing treatment, followed by thickening to a consistency of about 5%. In Examples 10-12, to the washed and thickened fibers was added a solution of FAS in amounts of 0.15, 0.25, and 0.5% FAS (based on dry weight of fiber), respectively. The FAS solution contained NaOH in an amount of 50% of the amount of FAS. The FAS was allowed to react with the pulp fibers at 70°C for 1 hour. The results are set forth in Table 3 below.

### Comparative Examples G, H, and I

The process described above in connection with Examples 10-12 was followed, except that in each of the examples an equivalent amount of NaOH was substituted for the sodium silicate solution. The % ISO measured are set forth in Table 3 below.

**TABLE 3**

| Example | Washed Brightness (WB) | % FAS | Bleached Brightness (BB) | Brightness Gained by FAS (BB-WB) |
|---|---|---|---|---|
| 10 | 68.0 | 0.15 | 77.5 | 9.5 |
| 11 | 68.0 | 0.25 | 77.7 | 9.7 |
| 12 | 68.0 | 0.5 | 77.8 | 9.8 |
| G | 68.3 | 0.15 | 76.0 | 7.7 |
| H | 68.3 | 0.25 | 75.8 | 7.5 |
| I | 68.3 | 0.5 | 76.2 | 7.9 |

From the results set forth in Table 3, it was found that the presence of sodium silicate in Examples 10-12 attributed to a greater brightness gain being attained from the FAS bleaching of the washed pulp. More specifically, the washed pulps of Examples 10-12 underwent brightness gains of 9.5, 9.7, and 9.8, % ISO, respectively, which are greater than the corresponding brightness gains of Comparative Examples G-I by 1.8, 1.5, and 1.9 % ISO, respectively. Additionally, the overall brightness attained by Examples 10-12 from both washing and bleaching were 77.5, 77.7, and 77.8 % ISO, respectively, which are greater than those of Comparative Examples G-I by 1.5, 1.9, and 1.6 % ISO, respectively.

The foregoing detailed description of the embodiments of the invention has been provided for the purposes of illustration and description. It is not intended to be exhaustive or to limit the invention to the precise embodiments disclosed. The embodiments were chosen and described to best explain the principles of the invention and its practical application, thereby enabling others skilled in the art to understand the invention. While the invention has been described in connection with what is presently considered to be the most practical and preferred embodiments, it is understood that the invention is not limited to the disclosed embodiments. To the contrary, this invention is intended to cover various modifications and equivalent arrangements included within the spirit and scope of the appended claims.

## Claims

1. A process for making brightened pulp from one or more secondary fiber sources, said process comprising:
disintegrating one or more secondary fiber sources in an aqueous medium optionally comprising sodium silicate to form a treated pulp slurry, said sources collectively being comprised of less than 50% by weight mechanical fibers;
washing the treated pulp slurry with a solution comprising sodium silicate and at least one member selected from the group consisting of sodium hydroxide and sodium carbonate to form a washed pulp slurry; and
bleaching the washed pulp slurry with at least one sulfur-containing reductive bleaching agent,
wherein hydrogen peroxide is not added into or present in said process at least until said washing step is complete.

2. A process according to claim 1, wherein the aqueous medium of said disintegrating step comprises sodium silicate.

3. A process according to claim 2, wherein the sulfur-containing reductive bleaching agent comprises formamidine sulfinic acid.

4. A process according to claim 3, wherein said bleaching step is performed in a bleaching tower.

5. A process according to claim 2, wherein the aqueous medium of said disintegrating step contains 0.1% to 4.0% of 40-45° Baume sodium silicate solution.

6. A process according to claim 2, wherein the aqueous medium of said disintegrating step contains 0.2% to 2% by weight of 40-45° Baume sodium silicate solution.

7. A process according to claim 1, further comprising thickening the washed pulp slurry prior to said bleaching step.

8. A process according to claim 1, wherein the aqueous medium further comprises sodium hydroxide.

9. A process according to claim 1, wherein hydrogen peroxide is not added into or present in said process at least until said bleaching step is complete.

10. A process according to claim 1, wherein at least one of the secondary fiber sources contains ink.

11. A process for making brightened pulp from one or more secondary fiber sources, said process comprising:
disintegrating one or more secondary fiber sources in an aqueous medium optionally comprising sodium silicate to form a treated pulp slurry, said sources collectively being comprised of less than 50% by weight mechanical fibers;
washing the treated pulp slurry with a solution comprising sodium silicate and at least one member selected from the group consisting of sodium hydroxide and sodium carbonate to form a washed pulp slurry; and
bleaching the washed pulp slurry with at least one sulfur-containing reductive bleaching agent,
wherein an oxidative bleaching agent is not added into or present in said process at least until said washing step is complete.

12. A process according to claim 11, wherein the aqueous medium of said disintegrating step comprises sodium silicate.

13. A process according to claim 12, wherein the sulfur-containing reductive bleaching agent comprises formamidine sulfinic acid.

14. A process according to claim 13, wherein said bleaching step is performed in a bleaching tower.

15. A process according to claim 12, wherein the aqueous medium of said disintegrating step contains 0.1% to 4.0% of 40-45° Baume sodium silicate solution.

16. A process according to claim 12, wherein the aqueous medium of said disintegrating step contains 0.2% to 2% by weight of 40-45° Baume sodium silicate solution.

17. A process according to claim 11, further comprising thickening the washed pulp slurry prior to said bleaching step.

18. A process according to claim 11, wherein the aqueous medium further comprises sodium hydroxide.

19. A process according to claim 11, wherein an oxidative bleaching agent is not added into or present in said process at least until said bleaching step is complete.

20. A process according to claim 11, wherein at least one of the secondary fiber sources contains ink.
